Europäisches Patentamt

European Patent Office

Office européen des brevets

(19)

(11) **EP 0 661 529 B1**

(12) **EUROPÄISCHE PATENTSCHRIFT**

(45) Veröffentlichungstag und Bekanntmachung des Hinweises auf die Patenterteilung:
**19.08.1998 Patentblatt 1998/34**

(51) Int Cl.$^6$: **G01M 3/28**, G01M 3/32

(21) Anmeldenummer: **94120855.5**

(22) Anmeldetag: **28.12.1994**

(54) **Verfahren und Vorrichtung zur Prüfung eines Volumens auf Dichtheit und zur Feststellung der Grösse einer Leckagemenge**

Procedure and device for leak testing of a volume and for determining the leaking amount

Procédé et dispositif d'essai d'étanchéité d'un volume et pour déterminer la quantité de fuite

(84) Benannte Vertragsstaaten:
**AT CH DE FR GB IT LI**

(30) Priorität: **28.12.1993 DE 4344794**

(43) Veröffentlichungstag der Anmeldung:
**05.07.1995 Patentblatt 1995/27**

(73) Patentinhaber: **INTECU Gesellschaft für Innovation, Technologie und Umwelt mbH D-07549 Gera (DE)**

(72) Erfinder:
• **Knopf, Rainer**
**D-07549 Gera (DE)**

• **Münzner, Ralf**
**D-07549 Gera (DE)**

(74) Vertreter: **Kruspig, Volkmar, Dipl.-Ing. et al Patentanwälte Meissner, Bolte & Partner Postfach 86 06 24 81633 München (DE)**

(56) Entgegenhaltungen:
**GB-A- 2 057 145       US-A- 3 494 178**
**US-A- 5 197 324**

• **NTIS TECH NOTES, Januar 1988 SPRINGFIELD, VA US, Seite 32 'MEASURING LEAKAGE IN A PRESSURIZED-FLUID LOOP'**

EP 0 661 529 B1

**Beschreibung**

Die Erfindung betrifft ein Verfahren bzw. eine Vorrichtung zur Prüfung eines Volumens auf Dichtheit und zur Feststellung der Größe einer Leckagemenge.

Dichtigkeitsprüfeinrichtungen zum Feststellen von Undichtigkeiten in Entwässerungskanälen und Entwässerungsleitungen sind seit längerer Zeit bekannt.

Derartige bekannte Prüfeinrichtungen führen nach Absperrung einem zu prüfenden Abschnitt eines z.B. Entwässerungskanals eine vorgegebene Wassermenge zu, wobei dann über eine bestimmte Meßzeit ein auftretender Wasserverlust bestimmt und aus der Höhe des Wasserverlustes auf den Zustand des Kanals geschlossen wird.

Die in den Entwässerungskanal eingebrachte Wassermenge wird bei einer bekannten Lösung beispielsweise mittels eines Durchflußmengenmeßgeräts erfaßt. Zur Druckerfassung ist ein an die zu prüfende Leitung bzw. an den zu prüfenden Kanal angeschlossener Druckaufnehmer vorgesehen. Mit dem Erreichen eines Enddruckes wird im Falle von Undichtigkeiten, d.h. bei einem Druckabbau im System, die nachfließende Wassermenge bestimmt und aus der Größe der Wassermenge auf die Ausmaße des vorhandenen Lecks geschlossen.

Um geringere Leckagemengen zu ermitteln, wird bei einer weiteren bekannten Lösung der zu prüfenden Leitung ein Behälter vorgeschaltet. Mittels eines in dem Behälter angeordneten Ultraschallsensors wird der bei auftretenden Leckagen fallende Wasserspiegel im Behälter ermittelt und hieraus auf die Größe des vorhandenen Lecks geschlossen.

Zur Kanaldruckprüfung wurde ebenfalls bereits vorgeschlagen, über mehrere Dosierpumpen mit jeweils unterschiedlicher Fördermenge pro Hub den Prüfdruck im zu untersuchenden Kanalabschnitt aufzubauen. Die mit jedem Hub zugeführte Wassermenge wird rechnergestützt erfaßt und dargestellt. Nach Ablauf des Prüfzeitraums wird die während des Prüfzeitraums zugeführte Wassermenge zu einer erlaubten Menge eines möglichen Wasserverlustes in Beziehung gesetzt. Aus dem Vergleich der zugeführten und erlaubten Wassermenge kann dann auf den Zustand des untersuchten Kanals geschlossen werden.

Zum Erfassen auch kleinster Leckagemengen, die aus Umweltschutzgründen oder bei dem Verlegen von Leitungen in Trinkwasserschutzgebieten von größter Bedeutung sein können, muß also bei den bekannten Prüfeinrichtungen entweder auf eine aufwendige und störanfällige Überwachung eines Wasserspiegels mittels Ultraschallsensor in einem Freispiegelbehälter oder auf den Einsatz von Feindosierpumpen zurückgegriffen werden.

Insbesondere die Erfassung des Wasserspiegels in einem Behälter mittels Ultraschallsensor setzt voraus, daß sich der Füllstand bzw. der Wasserspiegel während der Messung nicht durch äußere Erschütterungen verändert. Das hubweise Dosieren bzw. Nachdosieren einer Prüf- bzw. Testflüssigkeit mittels Dosierpumpen ist neben den Kostenaufwendungen für die Dosierpumpen selbst sehr zeitaufwendig, so daß sich ein rationeller Einsatz z.B. zur abschnittsweisen Prüfung von Kanälen auf Baustellen ausschließt.

Es ist daher Aufgabe der Erfindung, ein Verfahren und eine Vorrichtung zur Prüfung eines Volumens auf Dichtheit und zur Feststellung der Größe einer Leckagemenge vorzuschlagen, welches bzw. welche das Erfassen einer Leckagemenge in einem außerordentlichen breiten Varianzbereich ohne aufwendige Meßsensorik ermöglicht. Das Verfahren soll hierbei auf leicht erfaßbare, mit dem Verlust von Testflüssigkeit im zu untersuchenden Prüfvolumen korrelierende Größen zurückgreifen.

Die Lösung der oben genannten Aufgabe der Erfindung erfolgt mit den Merkmalen des Patentanspruchs 1 und 9, wobei die abhängigen Ansprüche zweckmäßige Ausgestaltungen und Weiterbildungen des Gegenstandes der Hauptansprüche zeigen.

Der Grundgedanke der Erfindung besteht zunächst darin, ein Prüfvolumen mit einer Testflüssigkeit zu füllen und zu sättigen. Das Prüfvolumen steht erfindungsgemäß mit einem Meßvolumen in Verbindung, wobei das Meßvolumen von einem speziellen erfindungsgemäßen Behältnis mit vorgegebener bekannter geometrischer Form gebildet wird. Auftretende Verluste von Testflüssigkeit im Prüfvolumen werden durch Zuführung entsprechender adäquater Flüssigkeitsmengen aus dem Meßvolumen ausgeglichen.

Eine Bestimmung der Größe der Leckagemenge erfolgt dann ausschließlich durch einen ersten und einen zweiten Druckmeßsensor, wobei der erste Druckmeßsensor der Bestimmung des Relativdruckes zwischen dem Meßvolumen und der Umgebung dient und der zweite Druckmeßsensor zur Bestimmung des Differenzdruckes zwischen der Testflüssigkeitssäule im Meßvolumen und dem verbleibendem Volumen oberhalb der Testflüssigkeit im Meßvolumen verwendet wird. Mittels einer Druckerzeugungseinrichtung wird dann bei leckagebedingtem Testflüssigkeitsverlust der Druck im Meßvolumen derart erhöht, daß die Summe aus Relativdruck und Differenzdruck im wesentlichen konstant gehalten wird. Durch eine Bestimmung der Differenzdrücke am Anfang und am Ende einer vorbestimmten Meßzeit und aufgrund der Kenntnis der geometrischen Form des Meßvolumens sowie eines Eichpunktes kann dann die konkrete Leckagemenge in einfacher Weise ermittelt, z.B. durch einen Mikrorechner bestimmt werden.

Durch die spezielle Ausbildung des Meßvolumens können Leckagemengen im Bereich von wenigen Millilitern bis hin zu vielen Litern, d.h. mit einer Varianz in der Größenordnung von $10^4$ ermittelt werden. Das Meßvolumen wird in einer Ausführungsform der Erfindung durch einen Behälter gebildet, welcher eine Querschnittsfläche aufweist, die von unten nach oben abnimmt. Ein derartiger Behälter kann beispielsweise aus einem ersten Zylinder mit großem Durchmesser, einem daran anschließenden kegelstumpfartigen Abschnitt mit stetig abnehmendem Durchmesser und einem am oberen Ende des kegelstumpfartigen Abschnitts angeordneten zweiten Zylinder mit geringem Durchmesser gebildet werden.

Das erfindungsgemäße Verfahren und die zugehörige Vorrichtung sollen nunmehr mit Hilfe eines Ausführungsbeispiels und unter Zuhilfenahme von Figuren näher erläutert werden. Hierbei zeigt

Fig. 1   den prinzipiellen Aufbau der Vorrichtung zur Prüfung eines Volumens auf Dichtheit;
Fig. 2   ein Einsatzbeispiel der Dichtheitsprüfung neu verlegter Leitungen;
Fig. 3   ein weiteres Einsatzbeispiel einer Dichtheitsprüfung zum Feststellen von Undichtigkeiten an einer Muffe eines Abwasserkanals;
Fig. 4   eine Ausführungsform der Vorrichtung gemäß Fig. 1 mit Koppelventil und Meßvolumen ohne Kegelstumpf-Abschnitt und
Fig. 5   eine weitere Ausführungsform der Vorrichtung mit skalierten Schaugläsern für einen manuellen Betrieb.

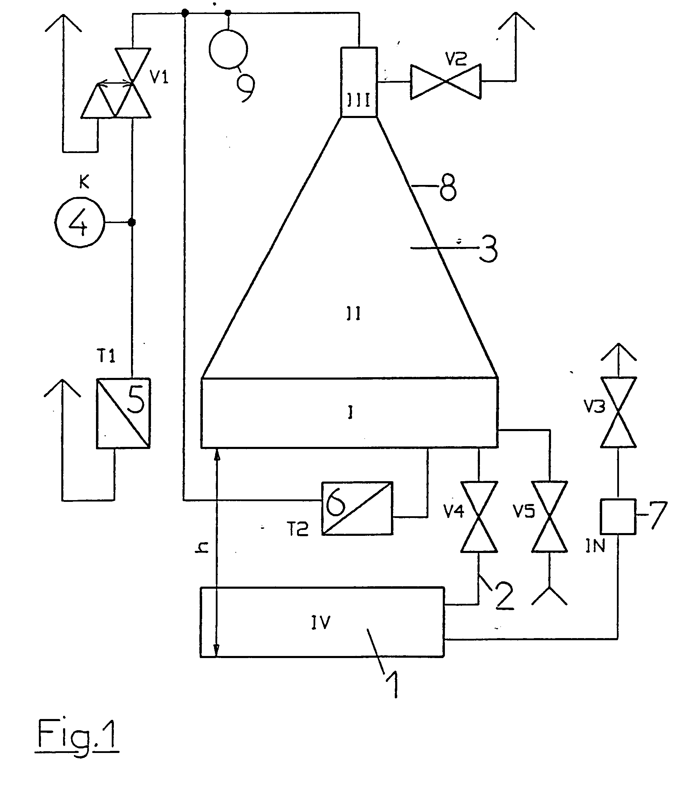

Das erfindungsgemäße Verfahren und die zugehörige Vorrichtung soll zunächst anhand der prinzipiellen Darstellung gemäß Fig. 1 näher erläutert werden.

Das zu prüfende Volumen 1, z.B. ein Abschnitt eines Abwasserkanals, ist über eine Verbindung 2, z.B. einen Schlauch, und über ein Absperrventil V4 mit dem unteren Abschnitt I des Meßvolumens 3 verbunden. Über ein Ventil V2 ist das Meßvolumen 3 an seinem oberen Abschnitt III entlüftbar. Über ein Umschaltventil V1 wirkt eine Druckerzeugungseinrichtung 4 auf das Meßvolumen 3 ein. Die Druckerzeugungseinrichtung 4 und das Meßvolumen 3 sind derart mit einem ersten Druckmeßsensor 5 verbunden, daß der Relativdruck zwischen dem Meßvolumen und der Umgebung erfaßt werden kann. Das Umschaltventil V1 ermöglicht des weiteren ein Freischalten des von der Druckerzeugungseinrichtung 4, z.B. einem Kompressor, erzeugten Druckes gegen die Umgebung.

Ein zweiter Druckmeßsensor 6 dient der Bestimmung des Differenzdruckes zwischen der im Meßvolumen 3 befindlichen Testflüssigkeit, z.B. Wasser, und dem verbleibendem Volumen oberhalb der Testflüssigkeit, d.h. im oberen Abschnitt III des Meßvolumens 3. Hierfür ist der zweite Druckmeßsensor zwischen dem unteren Abschnitt I und dem oberen Abschnitt III des vorerwähnten Meßvolumens 3 angeschlossen. Über ein weiteres Ventil V5 ist das Meßvolumen 3 mit der Testflüssigkeit füllbar.

Am Prüfvolumen 1 befindet sich ein weiterer Anschluß, welcher auf einen Testflüssigkeitsindikator 7 führt. Beim Befüllen des Prüfvolumens mit der Testflüssigkeit kann über die vorerwähnte Verbindung zunächst Luft und dann die Testflüssigkeit über den Testflüssigkeitsindikator 7 und ein geöffnetes Ventil V3 entweichen. Der Testflüssigkeitsindikator 7 dient zur Abgabe eines Signals dann, wenn im wesentlichen ausschließlich Testflüssigkeit die erwähnte Verbindung durchströmt.

Die Höhendifferenz h zwischen dem Meßvolumen 3 und dem Prüfvolumen 1 wird als bekannt vorausgesetzt. Ebenso ist die konkrete geometrische Form des Behälters 8, der das Meßvolumen 3 umschließt, bekannt.

Die Bestimmung der Leckagemenge erfolgt nun wie nachstehend beschrieben.

Zunächst liegt das Meßvolumen über das Ventil V2 und/oder das Ventil V1 an Umgebung. Das Ventil V4 in der Verbindung 2 ist offen, die Druckerzeugungseinrichtung 4 ausgeschaltet. Das Prüfvolumen 1 und das Meßvolumen 3 ist mit Luft gefüllt. Der erste und der zweite Druckmeßsensor 5 und 6 bestimmen einen Druck im wesentlichen gleich Null. Der Testflüssigkeitsindikator 7 signalisiert Luft bzw. "keine Testflüssigkeit".

Über das Ventil V5 strömt nunmehr Testflüssigkeit, z.B. Wasser, in den unteren Abschnitt I des Meßvolumens 3 ein. Durch das geöffnete Ventil V4 gelangt das Wasser in das Prüfvolumen 1, wodurch das Prüfvolumen 1 aufgrund des Schweredruckes des Wassers gefüllt wird. Damit wird das Prinzip des Füllens über einen Freispiegelbehälter gemäß DIN 4033 verwirklicht. Gegebenenfalls kann dieses Füllen auch mit dem später aufzubauenden Prüfüberdruck erfolgen. Ein Entlüften des Prüfvolumens 1 erfolgt über den Testflüssigkeitsindikator 7 und das Ventil V3 hin zur Umgebung.

Es sei an dieser Stelle angemerkt, daß bei großen Prüfvolumina auch eine direkte, schnelle Füllung desselben mittels eines weiteren, in der Figur nicht gezeigten Füllanschlusses möglich ist.

Der Füllvorgang des Prüfvolumens 1 läuft solange ab, bis das eindringende Wasser die Luft im Prüfvolumen 1 vollständig verdrängt und der Testflüssigkeitsindikator 7 das Vorhandensein von Wasser signalisiert hat. Nach Abschluß der vollständigen Füllung des Prüfvolumens 1 werden die Ventile V2, V3 und V5 geschlossen.

In einem nächsten, zeitlich begrenzten Meßvorbereitungsabschnitt erfolgt eine Sättigung des Prüfvolumens 1. Hierfür liegt das Meßvolumen 3 nach Umschalten des Ventils V1 an der Druckerzeugungseinrichtung 4 und am ersten Druckmeßsensor 5 an. Die Druckerzeugungseinrichtung 4 wird solange aktiviert, bis mittels des ersten Druckmeßsensors 5 ein Druckwert ermittelt wird, der innerhalb vorgegebener Grenzen liegt. Bemesfür den einzustellenden Relativdruckwert PR ist folgende Beziehung:

PR = (Prüfdruck im Prüfvolumen) - (Wassersäulendruck h)

- (Differenzdruck gemessen mit dem zweiten

Druckmeßsensor)

Auftretende Wasserverluste im Meßvolumen 3 werden durch Wasserzufuhr über das Ventil V5 ausgeglichen.

Im Anschluß an den Sättigungsvorgang des Prüfvolumens 1 kann das Ventil V3 nochmals geöffnet werden, um vorhandene Restluft aus dem Prüfvolumen 1 entweichen zu lassen. Die Öffnung des Ventils V3 erfolgt zweckmäßigerweise über einen vorgegebenen zeitlich begrenzten Abschnitt, innerhalb dessen der Testflüssigkeitsindikator 7 ausschließlich "Testflüssigkeit vorhandenen" signalisiert. Druck- und Wassesrverluste werden in dieser Phase über das Ventil V5 ausgeglichen.

In einem nächsten Verfahrensschritt werden die Abschnitte I bis III des Meßvolumens 3 aufgefüllt.

Zum ersten wird der Differenzdruck mittels des zweiten Druckmeßsensors 6 bestimmt und es erfolgt ein Öffnen des Ventils V5. Beim Erreichen einer Füllstandshöhe im oberen Abschnitt III wird zweckmäßigerweise das Ventil V5 abwechselnd im Impulsbetrieb kurzzeitig geöffnet und geschlossen.

Zum zweiten erfolgt eine Auswertung des bei der Füllung des Meßvolumens 3 über der Wasseroberfläche, d.h. im freien Volumenabschnitt des Meßvolumens 3, ansteigenden Relativdruckes PR. Durch zeitlich begrenztes Umschalten des Ventils V1, d.h. durch eine Verbindung des Meßvolumens mit der Umgebung wird der Druck im Meßvolumen 3 reduziert. Nach dem Rückschalten des Ventils V1 wird der Füllvorgang fortgesetzt, bis ein maximaler vorgegebener Relativdruckwert erreicht ist.

Der Vorgang des Auffüllens der Abschnitte I bis III des Meßvolumens 3 endet mit dem Erreichen eines Testflüssigkeitsspiegels innerhalb vorgegebener Grenzen im oberen Abschnitt III des Meßvolumens 3. Wenn dieser Flüssigkeitsspiegel bzw. Flüssigkeitsstand erreicht ist, schließt das Ventil V5. Zur Erreichung der Endbedingungen muß des weiteren ein errechneter Relativdruckwert, dessen Bemessungsgrundlage analog der Einstellung des Relativdruckes im Abschnitt zur Sättigung des Prüfvolumens erfolgt, innerhalb vorgegebener Toleranzen gegeben sein. Die Druckerzeugungseinrichtung 4 befindet sich dann im Aus-Zustand, und das Meßvolumen III liegt über das Ventil V1 am ersten Druckmeßsensor 5 an.

Nachdem die im vorerwähnten Verfahrensschritt beschriebenen Endbedingungen erreicht wurden, beginnt ein zeitlich begrenzter Meßabschitt, z.B. über eine Zeitdauer von 15 Minuten.

Im Falle einer vorhandenen Leckage im Prüfvolumen führen dann auftretende Wasserverluste zu einer Reduzierung des Differenzdruckes und des Relativdruckes. Um den Prüfdruck, der z.B. auf 0,5 bar vorgegeben ist, im Prüfvolumen 1 konstant zu halten, wird der Relativdruck durch Betätigung der Druckerzeugungseinrichtung 4 erhöht. Diese Erhöhung des Relativdruckes erfolgt mit dem Ziel, daß die Summe aus Relativdruck und Differenzdruck im wesentlichen konstant gehalten wird.

Die Differenzdrücke am Anfang bzw. am Ende der vorgegebenen Meßzeit werden bestimmt, und aus der bekannten geometrischen Form des Meßvolumens in den Abschnitten I bis III wird der aufgetretene, leckagebedingte Wasserverlust errechnet. Um diese Berechnung durchführen zu können, wird einmalig ein absoluter Eichpunkt eines bestimmten Füllstandes der Testflüssigkeit mit dazugehörigem Differenzdruckwert bestimmt.

Alternativ ist es möglich, vor jedem Einsatz der Vorrichtung zur Prüfung eines Volumens auf Dichtheit das Erreichen einer bestimmten Füllstandshöhe mittels eines einfachen optischen Sensors und den hierzu gehörigen Differenzdruckwert zu erfassen. Zweckmäßigerweise ist der vorerwähnte in der Fig. 1 nicht gezeigte optische Sensor im oberen Abschnitt III des Meßvolumens 3 angeordnet. Mit dieser Selbsteichung können Alterungserscheinungen und Toleranzen der Druckmeßsensoren selbsttätig vor jeder Messung ausgeglichen bzw. berücksichtigt werden.

Durch die spezielle Gefäßform der Abschnitte I bis III des Meßvolumens 3 in aneinandergrenzender Folge eines Zylinders, eines Kegelstumpfes und eines weiteren Zylinders kann ein Meßumfang von 1 bis $10^4$ erreicht werden.

Des weiteren besteht die Möglichkeit des wiederholten Auffüllens der Abschnitte I bis III des Meßvolumens 3, wobei die hierfür benötigte Zeit nicht der Prüfzeit zugerechnet wird. Hierdurch läßt sich eine Meßbereichserweiterung jeweils in Abhängigkeit von der Anzahl der Wiederauffüllphasen erreichen.

An der Verbindung zwischen der Druckerzeugungseinrichtung 4 hin zum Meßvolumen 3 kann zur Verbesserung des Regelverhaltens der Vorrichtung ein Druckspeicherbehälter 9 angeordnet sein.

Das Entleeren des Prüfvolumens 1 erfolgt durch Öffnen des Ventils V3. Wenn der Relativdruck PR, der mittels des ersten Druckmeßsensors 5 bestimmt wird, gleich Null ist, wird V2 geöffnet. Die Entleerungsphase endet dann, wenn der Differenzdruck, der mittels des zweiten Druckmeßsensors 6 bestimmt wird, konstant ist. Danach befindet sich die Vorrichtung im Ausgangszustand, und es kann eine erneute Messung beginnen.

Das Ventil V4, welches in der Verbindung 2 zwischen dem Meßvolumen 3 und dem Prüfvolumen 1 angeordnet ist, dient der Entkopplung des Meßvolumens 3 vom Prüfvolumen 1 während des Ablaufes von Serviceroutinen, die bis spätestens einschließlich des Sättigungsabschnitts des Prüfvolumens ablaufen können.

Es liegt im Sinne der Erfindung, daß die einzelnen verfahrensschritte mittels eines Mikrorechners gesteuert und die Meßergebnisse für eine nachfolgende Auswertung gespeichert werden bzw. dokumentierbar sind. Mittels der Vorrichtung ist es daher möglich, die Erfordernisse zur Neuabnahme oder zur Überprüfung von Abwasserrohrleitungen nach DIN 4033 mit Wasser, mittels Vakuum oder auch nach OE-Norm B 2503 mit Luft vollständig zu erfüllen. Die Dichtigkeitsprüfung kann für bestehende, aber auch für im Betrieb befindliche Abwasserkanäle mittels spezieller Absperr- und Prüfdichtkissen erfolgen. Nach der Installation der Vorrichtung kann unter Verweis auf die Mikrorechnersteuerung die Dichtheitsprüfung weitgehend automatisch durchgeführt werden. Eine Anzeige des aktuellen Wasserverlustes während der Sättigung des Prüfvolumens kann zum vorzeitigen Erkennen des Sättigungsendes verwendet werden und führt damit zu einer wesentlichen Zeitersparnis gegenüber den zum Beispiel in DIN 4033 genannten Vorfüllzeiten.

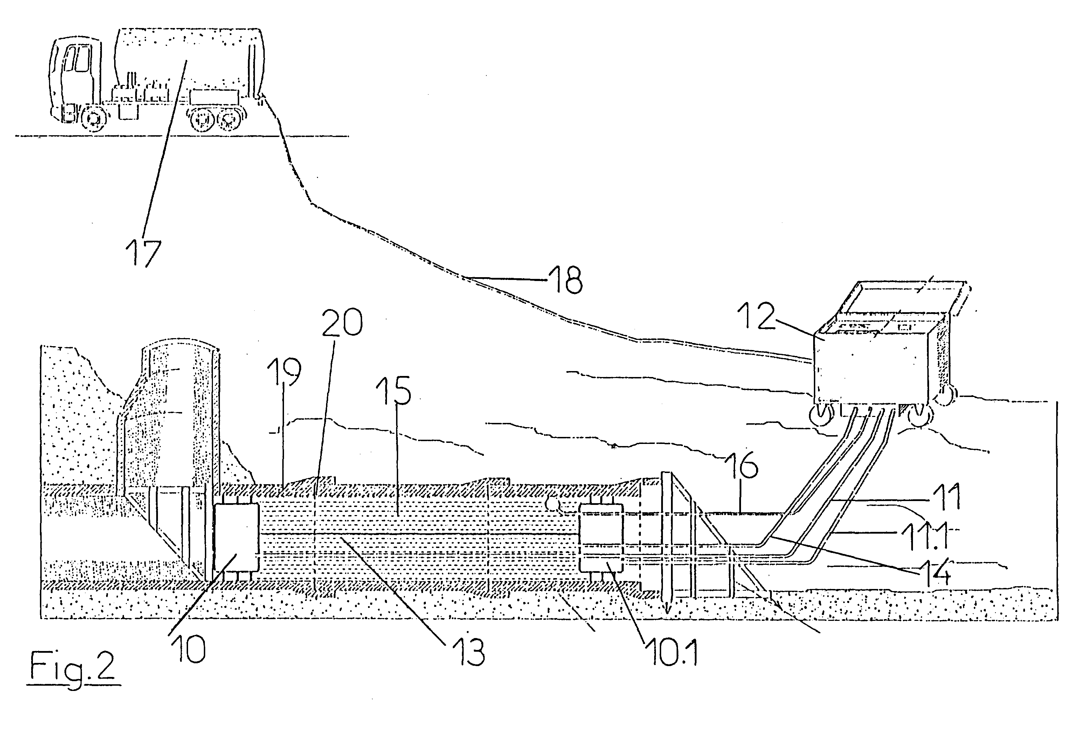

Das Verfahren der Dichtheitsprüfung soll nunmehr am Beispiel neu verlegter Leitungen und unter Zuhilfenahme der Fig. 2 näher erläutert werden.

Zunächst werden in einen Abschnitt einer neuverlegten, noch nicht überschütteten Abwasserleitung Kanalabsperrblasen 10 und 10.1 eingebracht. Diese Kanalabsperrblasen 10, 10.1 sind über eine entsprechende Verbindungsleitung 11, 11.1 mit einer Druckerzeugungseinrichtung, die sich in der Dichtheitsprüfvorrichtung 12 befindet, verbunden. Die Kanalabsperrblasen 10 und 10.1 können zweckmäßigerweise mit einem Gestänge 13 gekoppelt sein. Über eine weitere Verbindungsleitung 14 wird Testflüssigkeit, z.B. Wasser, in das durch die Kanalabsperrblasen gebildete Prüfvolumen 15 eingeleitet.

Über eine Verbindungsleitung 16 wird zum einen eine Entlüftung des Prüfvolumens 15 sichergestellt und zum anderen ein Füllstandssignal der Dichtheitsprüfvorrichtung 12 übermittelt. Ein Saug- oder Spülfahrzeug mit einem Wassertank 17 ist über eine Schlauchverbindung 18 an der Dichtheitsprüfvorrichtung 12 angeschlossen. Anstelle der Wasserversorgung über den Wassertank 17 kann auch ein Hydrant o.ä. benutzt werden.

Nachdem die Dichtheitsprüfung des jeweiligen Kanalabschnitts 19, insbesondere der Verbindungsstellen 20 erfolgreich abgeschlossen wurde, erfolgt ein Verfüllen bzw. Überschütten des Kanalabschnitts 19. Im Falle festgestellter Undichtigkeiten kann ein nachträgliches Abdichten ohne aufwendige Erdarbeiten erfolgen.

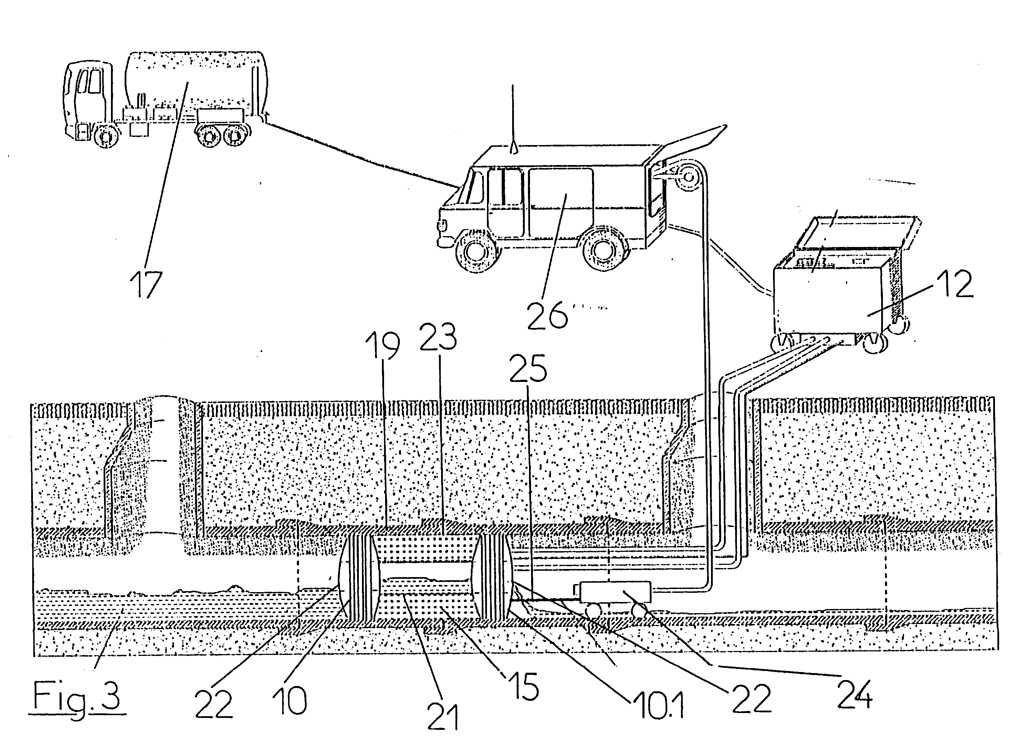

Mit Hilfe der Fig. 3 soll die Dichtheitsprüfung, insbesondere eine Muffenprüfung eines Abwasserkanals, welcher in Betrieb ist, erläutert werden.

Die in der Fig. 3 gezeigten Absperrblasen 10 und 10.1 sind mit einem Hohlkörper 21 verbunden. Die Kanalabsperrblasen 10 und 10.1 besitzen jeweils eine in den Hohlkörper 21 übergehende Durchflußöffnung 22. Das Prüfvolumen 15 umgibt den Hohlkörper 21 und dient der Prüfung einer Muffenverbindung 23 im Kanalabschnitt 19. Die Positionierung bzw. die Lage der Kanalabsperrblasen 10, 10.1 mit Durchflußöffnung 22 erfolgt unter Kontrolle einer Kanalinspektionskamera 24. Die Kanalinspektionskamera 24 ist über ein Verbindungsgestänge 25 mit der einstiegsschachtseitigen Kanalabsperrblase 10.1 verbunden.

Im gezeigten Beispiel gemäß der Fig. 3 wird die Dichtheitsprüfvorrichtung 12 gemeinsam mit einem kameragestützten Inspektionsfahrzeug 26 genutzt. Das Betreiben der Dichtheitsprüfvorrichtung 12 kann autark, aber auch vom Inspektionsfahrzeug 26 aus gesteuert erfolgen. Die Wasserversorgung des Prüfvolumens 15 bzw. der Dichtheitsprüfvorrichtung 12 erfolgt, analog wie zu Fig. 2 erläutert, über den Wassertank 17 eines Saug- und Spülfahrzeugs oder über einen Hydranten.

Mit der Verwendung der speziellen Kanalabsperrblasen mit Durchflußöffnung kann eine Dichtheitsprüfung an im Betrieb befindlichen Abwasserkanalsystemen ohne wesentliche Störung dieses Betriebs erfolgen.

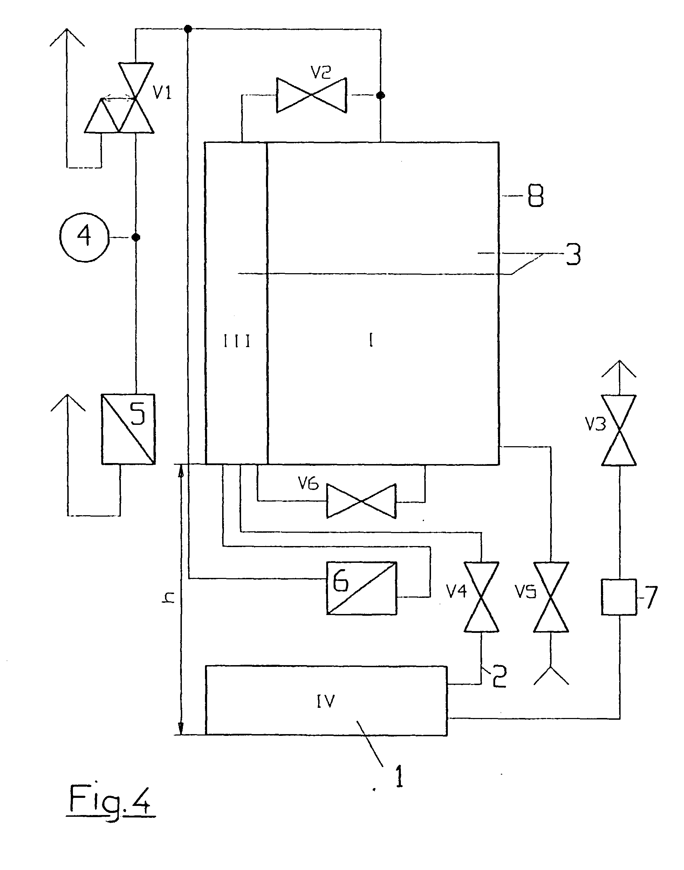

Die Fig. 4 zeigt eine Ausführungsform der Vorrichtung gemäß Fig. 1 mit einem zusätzlichen Ventil V6 für die Kopplung und Entkopplung der Meßvolumenabschnitte I und III, das an der Unterseite des Meßvolumens 3 die entsprechenden Abschnitte verbindend, angeordnet ist.

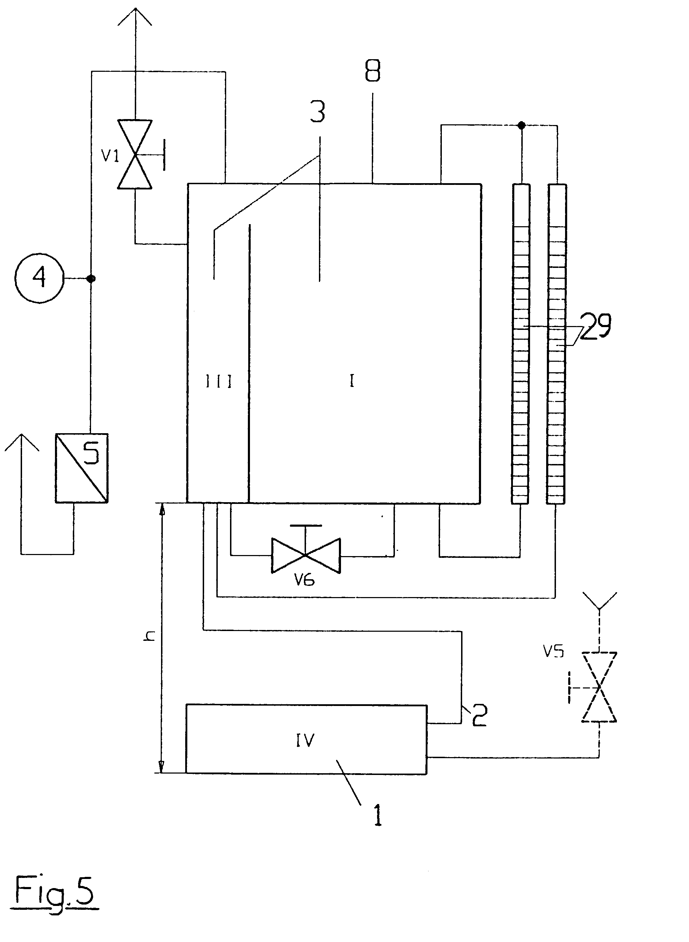

Beim gezeigten Ausführungsbeispiel gemäß Fig. 4 sind die Abschnitte I und III des Meßvolumens 3 nebeneinander oder auch ineinander, wie dies in der Fig. 5 prinzipiell gezeigt ist, angeordnet und haben beispielsweise eine zylindrische Form. Der Kegelstumpfabschnitt II gemäß Fig. I kann bei diesem Ausführungsbeispiel entfallen.

Die Funktion des Ventiles V2 ist, bezogen auf das Ausführungsbeispiel gemäß Fig. 1, geändert. Hier hat das Ventil V2 die Funktion der Kopplung und Entkopplung der Meßvolumenabschnitte I und III, an deren Oberseite. Die Funktion des Ventiles V2 aus der Fig. 1 übernimmt beim Ausführungsbeispiel gemäß Fig. 4 das Ventil V1. Ein Druckspeicherbehälter 9 ist nicht erforderlich.

Der Verfahrensablauf mit einer Vorrichtung gemäß dem Ausführungsbeispiel nach Fig. 4 ist folgender.

Die Füllung des Prüfvolumens 1 erfolgt grundsätzlich mit dem in der später durchzuführenden Messung aufzubauenden Prüfüberdruck über das zusätzlich vorhandene, geöffnete Ventil V6, wobei das Ventil V5 in Abhängigkeit vom vorgenannten Überdruck gesteuert wird. Der Druckmeßsensor 5 liegt über das Ventil V1 am Abschnitt I des Meßvolumens 3 an. Das Ventil V2 ist geschlossen. Die Sättigung des Prüfvolumens 1 erfolgt durch Überdruckerzeugung mit geschlossenem Ventil V2 und geöffnetem Ventil V6. Bei Wasser- bzw. Druckverlusten wird druckabhängig Wasser bzw. Testflüssigkeit nachgeführt. Das Auffüllen der Abschnitte I und III des Meßvolumens 3 erfolgt bei geöffneter Stellung der Ventile V2 und V6, ansonsten wie beim ersten Ausführungsbeispiel.

Für die eigentliche Messung wird davon ausgegangen, daß bei unbekannter Leckagemenge des Prüfvolumens zunächst mit einer Messung in einem kleineren Meßbereich zu beginnen ist. In diesem Fall ist das Ventil V2 offen und das Ventil V6 geschlossen. Sobald mittels des Druckmeßsensors 6 das Erreichen eines bestimmten Testflüssigkeits- bzw. Wasserpegels im Abschnitt III des Meßvolumens 3 feststellbar ist, wird auf einen größeren Meßbereich umgeschaltet. Hier ist dann das Ventil V2 und das Ventil V6 offen und die Messung wird fortgesetzt.

Ebenso wie beim ersten Ausführungsbeispiel ist hier ein Wiederauffüllen des Systems bei Überschreitung des zweiten, größeren Meßbereiches vorgesehen derart, daß anschließend nur noch im größeren Meßbereich gemessen wird. Die einzelnen, zwischenzeitlich bestimmten Teil-Leckagemengen gehen als Summe in das gesamte Meßergebnis ein.

Zur Entleerung werden das die Verbindung zur Umgebung herstellende Ventil V1 sowie die Ventile V2 und V6 geöffnet.

Im übrigen entsprechen die verwendeten Bezugszeichen gemäß Fig. 4 dem in der Fig. 1 verwendeten und dort erläuterten.

Die Fig. 5 zeigt eine beispielhafte weitere Ausführungsform der Vorrichtung, insbesondere für einen manuellen Betrieb bzw. eine manuelle Steuerung des Meßablaufes. Gemäß Fig. 5 erfolgt eine Kopplung der Meßvolumenabschnitte III und I beispielsweise dadurch, daß das Meßvolumen bzw. die einzelnen Abschnitte des Meßvolumens in einem Behälter angeordnet sind und die Kammer zur Trennung des Meßvolumenabschnittes III eine Verbindung an der Oberseite zum Meßvolumenabschnitt I aufweist. Hierdurch kann auf ein Ventil analog dem Ventil V2 gemäß den vorangegangen Ausführungsbeispielen bzw. auf eine äußere dungsleitung verzichtet werden.

Bei der Ausführungsform gemäß der Fig. 5 können des weiteren die Ventile V3 und V4 entfallen.

Die übrigen vorhandenen Ventile V1, V6 und gegebenenfalls V5 werden manuell betätigt, wobei das letztgenannte Ventil V5 nicht unmittelbarer Bestandteil der Vorrichtung ist. Das Ventil V1 gemäß dem Ausführungsbeispiel nach Fig. 5 hat keine Umschaltfunktion mehr. Bei der vereinfachten Ausführungsform kann der Druckmeßsensor 6 sowie der Testflüssigkeitsindikator 7 entfallen.

Zusätzlich werden jedoch beispielsweise zwei Schaugläser 29 mit einer entsprechenden Skalierung eingesetzt, die an ihrem oberen Ende mit der Oberseite der Meßvolumenabschnitte I und III jeweils verbunden sind und die an ihrem unteren Ende mit den jeweiligen Unterseiten der Meßvolumenabschnitte I bzw. III in Verbindung stehen.

Der Prüfablauf bei der Ausführungsform gemäß Fig. 5 gestaltet sich wie folgt.

Zunächst wird das Prüfvolumen 1 beispielsweise über das (externe) Ventil V5 direkt aus einer vorhandenen Wasserquelle gespeist, d. h. es wird keine unmittelbare Freispiegelbefüllung vorgenommen. Hierfür sind die Ventile V1 und V6 offen. Die Entlüftung des Prüfvolumens 1 erfolgt über die Verbindungsleitung 2, den Behälter 8 und die geöffneten Ventile V1 und V6. Die Füllung erfolgt so lange, bis über die Verbindungsleitung 2 das Prüfmedium bzw. die Testflüssigkeit, nämlich Wasser, ansteigt, und der Behälter 8 sowie die Schaugläser 29 gefüllt sind und bis über das Ventil V1 die Testflüssigkeit gleichmäßig, d. h. ohne Blasenbildung, austritt.

Für die Sättigung des Prüfvolumens 1 sind die Ventile V1 und V5 geschlossen. Die Druckerzeugungseinrichtung 4 wird so lange manuell eingeschalten, bis ein Relativdruck PR, gemessen mit dem Druckmeßsensor 5, für die Prüfung erreicht ist. Da bei der gezeigten Ausführungsform auf einen zweiten Druckmeßsensor 6 verzichtet wird, ist zu berücksichtigen, daß für die Bestimmung des Relativdruckes PR stets von einer mittleren Füllung des Behälters 8 auszugehen ist.

Im Anschluß erfolgt ein Auffüllen der Abschnitte I und III des Meßvolumens 3 durch Wiederholen der vorangegangenen Schritte, nämlich dem Auffüllen des Prüfvolumens 1 und der anschließenden Erzeugung des Relativdruckes PR.

Für die eigentliche Messung wird das Ventil V6 zunächst geschlossen. Hierdurch entspricht der Wasserstand bzw. der Testflüssigkeitsstand im Meßvolumen 3 dem Wasser bzw. Testflüssigkeitsstand im zugeordneten Schauglas 29, wobei eventueller Verlust der Testflüssigkeit über die angezeigte Testflüssigkeits- bzw. Wasserstandsdifferenz ermittelbar ist. Mit dem Erreichen eines vorbestimmten Testflüssigkeits- bzw. Wasserverlustes, d. h. einer Höhendifferenz, wird das Ventil V6 geöffnet. Die Testflüssigkeit bzw. Wasserstände im Abschnitt I und III des Meßvolumens 3 und in den beiden Schaugläsern 29 gleichen sich aus. Ein Wasserverlust im jetzt vergrößerten Meßbereich ist wiederum über die erkennbare Differenz des Wasser- bzw. Testflüssigkeitsstandes mittels der Schaugläser 29 bestimmbar.

Für eine Entleerung werden die Ventile V1 und V6 geöffnet. Wenn die Vorrichtung drucklos ist, wird die Verbindungsleitung 2 entfernt, so daß der Behälter 8 leerlaufen kann.

Bei der Ausführungsform gemäß Fig. 5 kann das manuelle Betätigen der Ventile, d. h. das Betreiben der Vorrichtung durch Vorgabe mittels eines Rechnerprogrammes, das einzelne Bedienungsschritte vorgibt, unterstützt werden, so daß zwar eine manuelle Steuerung, jedoch eine hohe Betriebssicherheit vorhanden ist und Fehlbedienungen ausgeschlossen werden.

Zweckmäßigerweise muß der Bediener die Ausführung eines angegebenen Bedienungsschrittes bestätigen.

In einer weiteren Ausführungsform erfolgt der Druckaufbau im System automatisch, indem ein entsprechender Sensor mit der Druckerzeugungseinrichtung 4 verbunden ist.

Anstelle von Flüssigkeiten kann die Prüfung auch mit Luftüberdruck oder Luftunterdruck bei halbautomatischem Prüfablauf, d. h. einer manuellen Betätigung des Ventiles V1 durchgeführt werden.

Mit dem erfindungsgemäßen Verfahren und der dazugehörigen Vorrichtung zur Prüfung eines Volumens auf Dichtheit und zur Feststellung einer Leckagemenge kann zum einen innerhalb einer Vorfüllzeit eine ständige grobe Messung des aktuellen Wasserverlustes erfolgen, wobei bei Unterschreiten vorgegebener Grenzwerte die Vorfüllzeit abgebrochen werden kann und damit Meß- bzw. Prüfzeit eingespart wird. Im Anschluß an den erfolgreichen Abschluß des Vorfüllens beginnt die Wasserverlustbestimmung durch intelligente Volumenmessung zurückgeführt auf alleinige Bewertung der Druckverhältnisse in einem mit dem Prüfvolumen verbundenen speziellen Meßvolumen. Durch die spezielle Leckagemengenbestimmung bei bekanntem Meßvolumen kann ohne den Einsatz aufwendiger Dosierpumpen, Durchflußmengenmeßeinrichtungen oder Ultraschallsensoren zur Bestimmung der absoluten Höhe eines sich verändernden Füllstandes eine sichere Aussage hinsichtlich des Zustands des überprüften Kanals oder des Kanalabschnitts erfolgen. Aufgrund einer weitgehend automatischen Steuerung des Prüfablaufes sind Fehlbedienungen und Fehlinterpretationen der Meßergebnisse, wie dies beispielsweise beim bekannten Einsatz von Meßzylindern möglich ist, weitgehend ausgeschlossen. Das erfindungsgemäße Verfahren und die dazugehörige Vorrichtung ermöglichen auch eine Prüfung der Dichtheit mit Druckluft oder mittels Vakuum anstelle einer Testflüssigkeit.

Mittels universeller Kanalabsperrblasen oder Absperrkörper mit Durchflußöffnung können sowohl noch nicht im Betrieb befindliche Kanäle als auch abwasserführende Abschnitte und Kanäle oder Kanalsysteme geprüft werden.

**Patentansprüche**

1. Verfahren zur Prüfung eines Volumens auf Dichtheit und zur Feststellung der Größe einer Leckagemenge, **gekennzeichnet durch** die Verwendung von

   - einem mit einer Testflüssigkeit füllbaren, vorgegebenen Meßvolumen mit bekannter geometrischen Form und Größe,
   - einem im wesentlichen beliebigen Prüfvolumen, wobei zwischen dem Meß- und Prüfvolumen eine Verbindung zum Austausch der Testflüssigkeit besteht,
   - einer Einrichtung zum Auffüllen des Meßvolumens mit der Testflüssigkeit und zur Entlüftung des Meßvolumens,
   - einem ersten Druckmeßsensor zur Bestimmung des Relativdruckes zwischen dem Meßvolumen und der Umgebung,
   - einem zweiten Druckmeßsensor zur Bestimmung des Differenzdruckes zwischen der Testflüssigkeit und dem verbliebenen Volumen oberhalb der Testflüssigkeit im Meßvolumen,
   - einer Druckerzeugungseinrichtung, welche auf das Meßvolumen einen einstellbaren Druck ausübt, wobei

     a) das Meßvolumen geregelt mit Testflüssigkeit gefüllt und zweckmäßigerweise über die Verbindung im wesentlichen gleichzeitig dem Prüfvolumen Testflüssigkeit bis zum Erreichen der vollständigen Füllung des Prüfvolumens mit Testflüssigkeit zugeführt wird,
     b) mit dem Erreichen der vollständigen Füllung des Prüfvolumens die Zuführung von Testflüssigkeit zum Meßvolumen unterbrochen wird,
     c) die Druckerzeugungseinrichtung einen vorgegebenen Druck auf das Meßvolumen ausübt, wobei durch die Druckerzeugung und mittels der Verbindung eine Sättigung des Prüfvolumens mit Testflüssigkeit erfolgt,
     d) eine weitere geregelte Zuführung von Testflüssigkeit in das Meßvolumen bis zum im wesentlichen vollständigen Füllen desselben und/oder dem Erreichen eines vorgegebenen Druckes erfolgt, wobei die Flüssigkeitszuführung in Abhängigkeit von der Druckbestimmung im verbleibenden flüssigkeitsfreien Volumen oberhalb der Flüssigkeitsoberfläche und durch Auswertung des Differenzdruckes zwischen dem flüssigkeitsfreien Volumen und dem Druck der ansteigenden Flüssigkeitssäule im Meßvolumen vorgenommen wird,
     e) mit dem Erreichen der Endbedingungen aus dem vorangegangenen Verfahrensschritt die im Prüfvolumen auftretenden Flüssigkeitsverluste und damit die Leckagemenge wie folgt ermittelt wird:

   - laufende Erfassung des Differenzdruckes über eine vorherbestimmte Meßzeit,
   - Erhöhen des Relativdruckes mittels der Druckerzeugungseinrichtung derart, daß bei leckagebedingtem Testflüssigkeitsverlust die Summe aus Relativdruck und Differenzdruck im wesentlichen konstant gehalten wird,

- Bestimmen der Größe bzw. des Volumens der Leckagemenge aus der bekannten geometrischen Form bzw. der Größe des Meßvolumens und den Differenzdrücken am Anfang und am Ende der vorbestimmten Meßzeit sowie aus der Kenntnis eines Differenzdruckwertes zu mindestens einem vorab ermittelten absoluten Eichpunkt.

2. Verfahren nach Anspruch 1,
**dadurch gekennzeichnet,**
daß zur Meßvorbereitung die Druckerzeugungseinrichtung auf das Meßvolumen einen Druck derart ausübt, bis ein Relativdruck PR im wesentlichen nach folgender Beziehung erreicht ist:

PR = (Druck im Prüfvolumen) - (Druck der Flüssigkeitssäule

h in der Verbindung zwischen Meßvolumen und Prüfvolumen) -

(Differenzdruck)

3. Verfahren nach Anspruch 1 oder 2,
**dadurch gekennzeichnet,**
daß während des Befüllens von Meß- und/oder Prüfvolumen eine Entlüftung der entsprechenden Volumina erfolgt.

4. Verfahren nach Anspruch 1 bis 3,
**dadurch gekennzeichnet**,
daß mit ausreichendem Druck der Flüssigkeitssäulen im Meßvolumen und zwischen Meß- und Prüfvolumen h die Sättigung des Prüfvolumens allein durch den resultierenden Flüssigkeitsdruck erfolgt.

5. Verfahren nach einem der vorhergehenden Ansprüche,
**dadurch gekennzeichnet**,
daß das Meßvolumen von einem Gefäß mit über die Höhe veränderter Querschnittsfläche gebildet ist, wobei die schnittsfläche im vorgegebenen Maße von oben nach unten zunimmt.

6. Verfahren nach einem der vorhergehenden Ansprüche,
**dadurch gekennzeichnet**,
daß das Prüfvolumen durch in einem Rohrabschnitt od. dgl. angeordnete, die Querschnittsfläche des Rohrabschnitts beabstandet abdichtende Elemente gebildet wird.

7. Verfahren nach Anspruch 1,
**dadurch gekennzeichnet**, daß der absolute Eichpunkt die Lage des Testflüssigkeitsspiegels im Meßvolumen angibt.

8. Verfahren nach einem der vorhergehenden Ansprüche,
**dadurch gekennzeichnet**,
daß durch ein Wiederauffüllen des Meßvolumens (3) im jeweiligen Meßzyklus in Abhängigkeit von der Anzahl der Wiederauffüllphasen eine Meßbereichserweiterung durchführbar ist.

9. Vorrichtung zur Prüfung eines Volumens auf Dichtheit und zur Feststellung der Größe einer Leckagemenge, umfassend ein Prüfvolumen, Druckmeßsensoren sowie eine Testflüssigkeit,
**dadurch gekennzeichnet, daß**

- ein vorgegebenes Meßvolumen (3) über eine Verbindung (2) an dem Prüfvolumen (1) angeschlossen ist,
- das Meßvolumen (3) über eine absperrbare Einfüllvorrichtung mit Testflüssigkeit auffüllbar ist,
- am Prüf- und Meßvolumen (1; 3) jeweils absperrbare Entlüftungseinrichtungen angeordnet sind,
- eine Druckerzeugungseinrichtung (4) über ein Umschaltventil (V1) mit dem Meßvolumen (3) in Verbindung steht, wobei an der Druckerzeugungseinrichtung (4) und dem Meßvolumen (3) ein erster Druckmeßsensor (5) zur Bestimmung des Relativdruckes PR zwischen dem Meßvolumen und einer Umgebung angeschlossen ist,
- ein zweiter Druckmeßsensor (6) zur Bestimmung des Differenzdruckes zwischen der Testflüssigkeit und dem verbleibenden Volumen oberhalb der Testflüssigkeit im Meßvolumen (3) vorgesehen ist und

- daß ein Flüssigkeitsindikator (7) in einer Verbindung zwischen dem Prüfvolumen (1) und der absperrbaren Entlüftungseinrichtung (V3) angeordnet ist.

10. Vorrichtung nach Anspruch 9,
    **dadurch gekennzeichnet,**
    daß der erste Druckmeßsensor (5) den sich verändernden Druck im Meßvolumen (3) bei der Sättigung des Prüfvolumens (1) mit Testflüssigkeit in einer Prüfungsvorbereitungsphase bestimmt.

11. Vorrichtung nach Anspruch 9,
    **dadurch gekennzeichnet,**
    daß in der Verbindung (2) ein Absperrventil (V4) zum Entkoppeln des Meßvolumens (3) vom Prüfvolumen (1) für Einstell- und Kontrollarbeiten angeordnet ist.

12. Vorrichtung nach Anspruch 9,
    **dadurch gekennzeichnet**,
    daß zum Erkennen einer vorgegebenen Füllstandshöhe im Meßvolumen (3) zweckmäßigerweise in einem oberen Abschnitt desselben ein Füllstandssensor, vorzugsweise ein optischer Sensor angeordnet ist.

13. Vorrichtung nach Anspruch 9,
    **dadurch gekennzeichnet**,
    daß zur Verbesserung des Regelverhaltens der Vorrichtung zwischen der Druckerzeugungseinrichtung (4) und dem Meßvolumen (3) ein Druckspeicherbehälter (9) angeordnet ist.

14. Vorrichtung nach Anspruch 9,
    **dadurch gekennzeichnet**,
    daß das Meßvolumen (3) weitere Abschnitte (I, II, III) aufweist, die von einem flüssigkeitsdichten Behälter (8) umschlossen sind, wobei der Behälter (8) eine von oben nach unten sich vergrößernde Querschnittsfläche besitzt.

15. Vorrichtung nach Anspruch 9,
    **dadurch gekennzeichnet**,
    daß der Behälter (8) aus einem Bodenzylinder (I) einem sich an den Bodenzylinder anschließenden Kegelstumpf (II), welcher in einen Kopfzylinder (III) übergeht, besteht.

## Claims

1. Method for testing a volume for seal tightness and to ascertain the magnitude of an amount leaked, characterised by

   - the use of a predetermined measuring volume, which may be filled with a test liquid, and with a known geometric shape and size,
   - a substantially optional testing volume, a connection for interchange of the test liquid existing between the measuring and testing volumes,
   - a device for filling the measuring volume with the test liquid and for evacuating the measuring volume,
   - a first pressure-measuring sensor for determining the relative pressure between the measuring volume and the environment,
   - a second pressure-measuring sensor for determining the differential pressure between the test liquid and the volume remaining above the test liquid in the measuring volume,
   - a pressure-generating device, which exerts an adjustable pressure on the measuring volume,

     a) the measuring volume being filled in a regulated manner with test liquid, and test liquid being passed, more appropriately through the connection, substantially simultaneously to the testing volume, until total filling of the testing volume with testing liquid is achieved,
     b) with achievement of total filling of the test volume, the supply of test liquid to the measuring volume is interrupted,
     c) the pressure-generating device exerting a predetermined pressure on the measuring volume, saturation of the testing volume with test liquid being effected by the pressure generation and by means of the connection,

d) a further regulated supply of test liquid into the measuring volume is effected until the same is substantially totally filled, and/or a predetermined pressure is reached, the liquid supply being undertaken in dependence on the pressure determination in the remaining liquid-free volume above the liquid surface and by evaluation of the differential pressure between the liquid-free volume and the pressure of the rising liquid column in the measuring volume,

e) when the final conditions from the preceding method step are reached, the liquid losses occurring in the test volume and thus the quantity leaked is determined as follows:

- continuous determination of the differential pressure over a predetermined measuring time,
- increase in the relative pressure by means of the pressure-generating device in such a way that, when there is a loss of liquid due to leakage, the sum of relative pressure and differential pressure is kept substantially constant,
- determination of the magnitude or of the volume of the quantity leaked from the known geometric shape or size of the measuring volume and the differential pressures at the beginning and end of the predetermined measuring time, and from the knowledge of a differential pressure value at at least one absolute calibration point previously determined.

2. Method according to claim 1,
characterised in that,
for preparation for measurement, the pressure-generating device exerts a pressure on the measuring volume until a relative pressure PR is achieved according to the following equation:

PR = (pressure in test volume) - (pressure of the liquid

column h in the connection between measuring volume and

test volume) - (differential pressure).

3. Method according to claim 1 or 2,
characterised in that
during the filling of measuring and/or test volumes, evacuation of the corresponding volumes is undertaken.

4. Method according to claims 1 to 3,
characterised in that
where there is sufficient pressure of the liquid columns in the measuring volume and between the measuring and test volume h, saturation of the test volume is effected only by the resultant liquid pressure.

5. Method according to one of the preceding claims,
characterised in that
the measuring volume is formed by a vessel with a cross-sectional surface altering over height, the cross-sectional surface increasing from the top downwards to a predetermined degree.

6. Method according to one of the preceding claims,
characterised in that
the test volume is formed by elements located in a tube section or the like, and which seal the cross-sectional surface of the tube section at intervals.

7. Method according to claim 1,
characterised in that
the absolute calibration point indicates the position of the test liquid level in the measuring volume.

8. Method according to one of the preceding claims,
characterised in that
by means of a refilling of the measuring volume (3) in the respective measuring cycle in dependence on the number of refilling phases, an extension of the measuring range may be carried out.

9. Device for testing a volume for seal tightness and in order to establish the magnitude of a leaked quantity, comprising a test volume, pressure-measuring sensors and a test liquid,
characterised in that

- a predetermined measuring volume (3) is linked to the test volume (1) by a connection (2),
- the measuring volume (3) may be filled with test liquid via a closeable filling device,
- respectively closeable evacuation devices are located at the testing and measuring volumes (1;3),
- a pressure-generating device (4) communicates via a changeover valve (V1) with the measuring volume (3), a first pressure-measuring sensor (5) being connected to the pressure-generating device (4) and the measuring volume (3) in order to determine the relative pressure PR between the measuring volume and an environment,
- a second pressure-measuring sensor is provided to determine the differential pressure between the test liquid and the remaining volume above the test liquid in the measuring volume (3) and
- a liquid indicator (7) is located in a connection between the test volume (1) and the closeable evacuation device (V3).

10. Device according to claim 9,
characterised in that
the first pressure-measuring sensor (5) determines the changing pressure in the measuring volume (3) upon saturation of the test volume (1) with test liquid, in a test preparation phase.

11. Method according to claim 9,
characterised in that
there is located in the connection (2) a closure valve (V4) for uncoupling the measuring volume (3) from the test volume (1) for adjustment and monitoring operations.

12. Device according to claim 9,
characterised in that
in order to recognise a predetermined filling level in the measuring volume (3), there is located, more appropriately in an upper section of the same, a liquid level sensor, preferably an optical sensor.

13. Device according to claim 9,
characterised in that
in order to improve the regulating behaviour of the device, a pressure-storage container (9) is located between the pressure-generating device (4) and the measuring volume (3).

14. Device according to claim 9,
characterised in that
the measuring volume (3) has further sections (I,II,III), which are surrounded by a liquid-tight container (8), the container (8) having a cross-sectional surface which enlarges from the top downwards.

15. Device according to claim 9,
characterised in that
the container (8) consists of a base cylinder (I), and a truncated cone (II) connecting to the base cylinder, which merges into a head cylinder (III).

**Revendications**

1. Procédé pour vérifier un volume quant à son étanchéité et pour déterminer la valeur quantitative d'une fuite, caractérisé par l'utilisation de :

- un volume de mesure prédéterminé, de forme géométrique et de taille connues, susceptible d'être rempli d'un liquide d'essai,
- un volume de vérification sensiblement quelconque, une communication existant entre le volume de mesure et le volume de vérification pour l'échange du liquide d'essai,
- un dispositif pour remplir le volume de mesure avec le liquide d'essai et pour évacuer l'air du volume de mesure,
- un premier capteur de mesure de pression pour déterminer la pression relative entre le volume de mesure et l'environnement,

- un second capteur de mesure de pression pour déterminer la pression différentielle entre le liquide d'essai et le volume restant au dessus du liquide d'essai dans le volume de mesure, et
- un dispositif de production de pression, qui applique une pression réglable sur le volume de mesure,

dans lequel :

a) le volume de mesure est rempli de manière régulée avec le liquide d'essai et l'on admet judicieusement sensiblement simultanément par l'intermédiaire de la communication du liquide d'essai vers le volume de vérification jusqu'à atteindre le remplissage complet du volume de vérification avec du liquide d'essai,

b) lorsqu'on atteint le remplissage complet du volume de vérification on interrompt l'admission du liquide d'essai vers le volume de mesure,

c) le dispositif de production de pression applique une pression prédéterminée sur le volume de mesure et, grâce à la production de pression et au moyen de la communication, il se produit une saturation du volume de vérification avec le liquide d'essai,

d) on effectue une poursuite de l'admission régulée du liquide d'essai dans le volume de mesure jusqu'à remplir sensiblement totalement celui-ci et/ou jusqu'à atteindre une pression prédéterminée, et l'admission du liquide est effectuée en fonction de la détermination de la pression dans le volume restant exempt de liquide au-dessus de la surface du liquide et par évaluation de la pression différentielle entre le volume exempt de liquide et la pression de la colonne de liquide qui monte dans le volume de mesure,

e) lorsqu'on atteint les conditions finales de l'étape précédente du procédé, on détermine les pertes de liquide qui se produisent dans le volume de vérification et par conséquent la valeur quantitative des fuites, de la manière suivante :

- on détecte en continu la pression différentielle sur une durée de mesure de prédéterminée,
- on augmente la pression relative au moyen du dispositif de production de pression de telle manière qu'en présence des pertes de liquide dues aux fuites, la somme de la pression relative et de la pression différentielle est maintenue sensiblement constante, et
- on détermine la valeur ou le volume quantitatif des fuites à partir de la forme géométrique connue, ou de la valeur du volume mesuré et des pressions différentielles au début et à la fin de la durée de mesure prédéterminée, ainsi qu'en connaissant une valeur de pression différentielle associée à au moins un point d'étalonnage absolu déterminé au préalable.

2. Procédé selon la revendication 1, caractérisé en ce que pour la préparation de la mesure, le dispositif de production de pression exerce sur le volume de mesure une pression jusqu'à atteindre une pression relative PR sensiblement d'après l'équation suivante :

$$PR = (\text{pression dans le volume de vérification}) - (\text{pression de la colonne}$$

$$\text{de liquide h dans la communication entre le volume de mesure et le}$$

$$\text{volume de vérification}) - (\text{pression différentielle}).$$

3. Procédé selon l'une ou l'autre des revendications 1 et 2, caractérisé en ce que pendant le remplissage du volume de mesure et/ou du volume de vérification, on effectue une évacuation de l'air suivant un volume correspondant.

4. Procédé selon les revendications 1 à 3, caractérisé en ce que, en cas de pression suffisante dans les colonnes de liquide dans le volume de mesure et entre le volume de mesure et le volume de vérification h, la saturation du volume de vérification a lieu uniquement grâce à la pression de liquide résultante.

5. Procédé selon l'une des revendications précédentes, caractérisé en ce que le volume de mesure est constitué par un récipient qui présente une surface de section transversale variable suivant la hauteur, ladite surface de section transversale augmentant dans une mesure prédéterminée du haut vers le bas.

6. Procédé selon l'une des revendications précédentes, caractérisé en ce que le volume de vérification est formé par des éléments agencés dans un tronçon tubulaire ou similaire, situés à distance de la surface de section transversale du tronçon tubulaire, et assurant une étanchéité.

**7.** Procédé selon la revendication 1, caractérisé en ce que le point d'étalonnage absolu donne la position du niveau de liquide d'essai dans le volume de mesure.

**8.** Procédé selon l'une des revendications précédentes, caractérisé en ce que, par reremplissage du volume de mesure (3) dans le cycle de mesure respectif et en fonction du nombre des phases de reremplissage, on peut procéder à un élargissement de la plage de mesure.

**9.** Appareil pour vérifier un volume quant à son étanchéité et pour déterminer la valeur quantitative d'une fuite, comprenant un volume de vérification, des capteurs de mesure de pression ainsi qu'un liquide d'essai, caractérisé en ce que :

- un volume de mesure prédéterminé (3) est raccordé au volume de vérification (1) par l'intermédiaire d'une communication (2),
- le volume de mesure (3) est susceptible d'être rempli avec du liquide d'essai via un dispositif de remplissage capable d'être obturé,
- des dispositifs d'évacuation d'air capables d'être obturés sont agencés respectivement sur le volume de vérification et sur le volume de mesure (1; 3),
- un dispositif de production de pression (4) est en communication avec le volume de mesure (3) par l'intermédiaire d'une soupape d'inversion (V1), un premier capteur de mesure de pression (5) étant relié au dispositif de production de pression (4) et au volume de mesure (3) pour déterminer la pression relative PR entre le volume de mesure et l'environnement,
- un second capteur de mesure de pression (6) est prévu pour déterminer la pression différentielle entre le liquide d'essai et le volume restant au dessus du liquide d'essai dans le volume de mesure (3), et
- un indicateur de liquide (7) est agencé dans une communication entre le volume de vérification (1) et le dispositif d'évacuation d'air (V3) capable d'être obturé.

**10.** Appareil selon la revendication 9, caractérisé en ce que le premier capteur de mesure de pression (5) détermine la pression en variation dans le volume de mesure (3) lors de la saturation du volume de vérification (1) avec le liquide d'essai dans une phase de préparation de vérification.

**11.** Appareil selon la revendication 9, caractérisé en ce qu'une valve d'obturation (V4) est agencée dans la communication (2) afin de découpler le volume de mesure (3) vis-à-vis du volume de vérification (1) pour les opérations de réglage et de contrôle.

**12.** Appareil selon la revendication 9, caractérisé en ce que, pour reconnaître une hauteur de remplissage prédéterminée dans le volume de mesure (3) un capteur de niveau est agencé judicieusement dans un tronçon supérieur dudit volume, de préférence un capteur optique.

**13.** Appareil selon la revendication 9, caractérisé en ce que, pour améliorer le comportement en régulation de l'appareil, un réservoir accumulateur de pression (9) est agencé entre le dispositif de production de pression (4) et le volume de mesure (3).

**14.** Appareil selon la revendication 9, caractérisé en ce que le volume de mesure (3) comporte d'autres tronçons (I, II, III), qui sont entourés par un réservoir (8) étanche vis-à-vis du liquide, ledit réservoir (8) possédant une surface de section transversale qui va en augmentant depuis le haut vers le bas.

**15.** Appareil selon la revendication 9, caractérisé en ce que le réservoir (8) est constitué par un tronc de cône (II) qui se raccorde au cylindre de fond, et qui se transforme dans un cylindre de tête (III).

Fig.1

Fig.2

Fig. 3

Fig.4

Fig.5